# EUROPÄISCHE PATENTANMELDUNG

(11) **EP 0 575 853 A1**
(43) Veröffentlichungstag der Anmeldung: **29.12.1993**
(21) Anmeldenummer: 93109479.1
(22) Anmeldetag: 14.06.1993
(51) Int. Cl.: B23Q 7/14

(54) **Palettenwechsler für Werkzeugmaschinen**

(30) Priorität: 23.06.1992 DE 4220535
(71) Anmelder: DÖRRIES SCHARMANN GmbH, D-41236 Mönchengladbach (DE)
(72) Erfinder: Kessler, Kurt, D-8000 München 80 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(57) **Zusammenfassung**

Es wird ein Palettenwechsler für Werkzeugmaschinen beschrieben, der eine verschwenkbare Trägereinheit (3) mit zum Eingriff in komplementär geformte Palettenansätze (5) bestimmten Kupplungsfäusten (4) aufweist, wobei die Kupplungsfäuste und die Palettenansätze mittels eines über Keilspannflächen (7) auf die Palettenansätze einwirkenden Spannorgans (6) form- und kraftschlüssig verriegelbar sind.

## Beschreibung

Die Erfindung betrifft einen Palettenwechsler für Werkzeugmaschinen, bestehend aus einer vertikal verstellbar ausgebildeten, zwischen einer Aufspannstation auf dem Werkstücktisch und einer Rüststation verschwenkbaren Trägereinheit mit zwei einander diametral gegenüberliegenden, zum Eingriff in komplementär geformte Palettenansätze bestimmten Kupplungsfäusten sowie einem in der Trägereinheit zentrisch gelagerten, an den Palettenansätzen angreifenden Spannorgan.

Ein Palettenwechsler dieser Art ist aus der europäischen Patentanmeldung 0 356 216 A2 bekannt. Bei diesem bekannten Palettenwechsler erfolgt die Kupplung zwischen Palettenansätzen und Kupplungsfäusten über eine Kniehebelanordnung mit spreizbaren Kupplungsbolzen, die horizontal in entsprechende Ausnehmungen der Palettenansätze einfahrbar sind. Zusätzlich werden die Palettenansätze mittels eines Spanndeckelteils nach Art einer Zange mit Parallel-Spannbacken zwischen diesem Spanndeckelteil und den Kupplungsfäusten verklemmt.

Nachteilig ist bei diesem bekannten Palettenwechsler vor allem, daß zur Erzielung einer zufriedenstellenden Kupplung zwischen dem Palettenwechsler und den Paletten keine oder nur sehr geringe Toleranzen zugelassen werden können, da es sich um eine Formschluß-Kupplung handelt, und daß vor allem stets die Gefahr besteht, daß die Kupplungsvorgänge durch sich auf den Kuppelelementen oder in den Eingriffausnehmungen befindende Späne die Kuppelvorgänge zumindest gestört werden, häufig jedoch sogar verhindert wird, daß eine einwandfreie Kupplung erfolgt, was wiederum erhebliche Gefahren zur Folge hat, wenn trotz der mangelhaften Kupplung eine schnelle Schwenkbewegung eingeleitet wird. Die bei den Schwenkbewegungen auftretenden Fliehkräfte können bei nicht einwandfreier Kupplung sogar zum Ausheben der Palette aus der jeweiligen Schwenkfaust führen, was bei den üblichen Werkstück- und Palettengewichten von bis zu zwei Tonnen verheerende Wirkungen zur Folge haben kann. Ferner baut dieser Palettenwechsler extrem groß, so daß der erforderliche Bauraum speziell an kompakten, preiswerten Maschinen nicht vorhanden ist, um den Einsatz eines solchen Palettenwechslers zu ermöglichen.

Aufgabe der Erfindung ist es, einen Palettenwechsler der eingangs angeführten Art bei einfachem, kompaktem und damit raumsparendem Gesamtaufbau so auszubilden, daß die Wechselvorgänge innerhalb sehr kurzer Taktzeiten mit hoher Sicherheit durchgeführt werden können und eine Beeinträchtigung der Kuppelvorgänge durch Späne praktisch ausgeschlossen ist.

Gelöst wird diese Aufgabe nach der Erfindung im wesentlichen dadurch, daß die Kupplungsfäuste und die Palettenansätze mittels des über Keilspannflächen auf die Palettenansätze einwirkenden Spannorgans über spanableitend gerichtete Keil- und Stützflächen form- und kraftschlüssig verriegelbar sind.

Durch die form- und kraftschlüssige Kupplung über Schräg- und Stützflächen und das dadurch bedingte Vermeiden jeglichen Spiels zwischen Kupplungsfaust und Palettenansatz kann bei dem innerhalb einer sehr kurzen Taktzeit möglichen Wechseln der Palette kein Losrütteleffekt auftreten, so daß die erforderliche hohe Sicherheit auch bei großer Werkstück- und Palettenmasse stets gewährleistet ist. Dies wird durch den Effekt des Andrückens der Palettenansätze in Richtung der beim Wechselvorgang auftretenden Fliehkräfte sichergestellt. Etwaiges Spiel in der Faust kann sich somit bei der Einwirkung der Fliehkräfte nicht mehr negativ auswirken.

Von wesentlicher Bedeutung ist dabei ferner, daß durch die Ausgestaltung und Lage der Keil- und Stützflächen erreicht wird, daß an diesen Flächen keine Späne haften bleiben, sondern vielmehr abgleiten bzw. abrutschen und damit die Fixier- und Verkeilvorgänge nicht behindern.

Da die form- und kraftschlüssige Kupplung bevorzugt über an der Palette bzw. den Palettenansätzen vorgesehene Paßkeil- und Stützflächenelemente erfolgt, ist es möglich, diese Elemente sehr exakt zu positionieren und durch Verwendung von Hartmetall verschleißfest auszugestalten, so daß ein exaktes Zusammenwirken mit den Kupplungsfäusten ermöglicht wird. Eventuell vorhandene Toleranzen zwischen Kupplungsfaust und Palettenansatz wirken sich nicht störend aus, da aufgrund der über den Spannkopf erzielten Keilverspannung stets sichergestellt ist, daß die zur Zusammenwirkung bestimmten Keil- und Stützflächen exakt und vollflächig aneinander zur Anlage kommen.

Der Spannkopf kann dabei zur Erzielung eines optimalen Toleranzausgleichs im Falle der Ankopplung zweier Paletten entweder begrenzt schwenkbar gelagert sein, und es ist auch möglich, den Toleranzausgleich durch entsprechende Dimensionierung des den Spannkopf tragenden Zentralstabs zu erreichen, der in diesem Falle in seinem dem Spannkopf zugewandten Endbereich die erforderliche Elastizität besitzen kann.

Als Spanneinheit für das mit dem Spannkopf versehene Spannorgan wird vorzugsweise eine Druckfeder verwendet, die zwischen dem Wechslergehäuse und einem Ansatz des Zentralstabs angebracht ist. Damit wird es möglich, die Hubbewegung des Zentralteils der Trägereinheit gleichzeitig zur Erzeugung der erforderlichen Verspannkraft zwischen den Plattenansätzen und den Kupplungsfäusten zu nutzen, wobei diese Verspannung bevorzugt erst während eines Resthubbereichs erfolgt. Weil diese Druckfeder jeweils bei vorhandenen Paletten und deren Gewichten erst in den Endlagen eine Gegenkraft zu den angehobenen ober abgesenkten Massen der Paletten aufbaut, wirkt diese Druckfeder gleichzeitig als Endlagendämpfung.

Vorteilhaft ist es ferner, den Spannkopf gleichzeitig als Träger für eine Trennscheibe zwischen Arbeitsraum und Rüstplatz zu nutzen, da auf diese Weise ein separater Antrieb für diese Trennscheibe vermieden werden kann. Besonders günstig wirkt sich dabei aus, daß die Trennscheibe nur einen geringen Hub ausführt und somit eine einfachere Abdichtung ermöglicht und ein Aufschwingen der Trennscheibe durch große Hubbewegungen vermieden wird.

Nach einer weiteren Besonderheit der Erfindung ist es möglich, das Problem des Aushebens der Palette beim manuellen Spannen zu beseitigen. Dazu ist vorgesehen, daß an den konischen Auflagebolzen jeweils ein zylindrischer Ansatz vorgesehen wird, der nicht nur dem unerwünschten Ausheben entgegenwirkt, sondern auch ein gerades Aufsetzen der Palette und damit ein gerades Einrücken vorgesehener hydraulischer Kupplungen gewährleistet.

Ein besonders und damit raumsparend ausgestalteter Schwenkantrieb für den Palettenwechsler nach der Erfindung besteht aus einem vorzugsweise mittels einer Zylinder-Kolbenanordnung betätigten Kurbel-Kulissentrieb, wobei eine um eine horizontale Achse über einen Winkel von 180° verschwenkbare Kurbel über ein Kuppelorgan in eine Vertikalführung eines Kulissenteils eingreift, das auf einer Horizontalführung verschiebbar und mit einer Zahnstange fest verbunden ist, die in die Verzahnung des Zentralteils eingreift. Mit einem derartigen Antrieb ist es möglich, eine sinusartige Linearbewegung zu erzeugen, welche für eine optimale Beschleunigung und Verzögerung der Drehbewegung sorgt und auch die sonst mit Endlagendämpfungen und zusätzlichen Stoßdämpfern entstehenden Probleme beseitigt. Weil dieser Aufbau sehr kompakt ist, kann man unter diesem Palettenwechsler noch Nebenaggregate unterbringen, wie zum Beispiel den erforderlichen Späneförderer. Dies ermöglicht es sogar, ein völlig neues Maschinendesign zu schaffen, was nicht erreichbar ist mit dem bereits erwähnten, in der europäischen Patentanmeldung 0 356 216 beschriebenen Antrieb, der extrem groß und schwer ausgebildet ist und weder von den Platzverhältnissen noch von den Herstellkosten befriedigen kann.

Schließlich wird durch die Erfindung auch erreicht, daß die für die Bedienungspersonen bei nicht ordnungsgemäßer Absicherung gefährlichen Hub- und Schwenkbewegungen des Palettenwechslers so abgesichert werden, daß während der Bewegung des Wechslers vorhandene Schutztüren weder versehentlich noch durch Manipulation geöffnet werden können. Dazu wird unter Ausnutzung des zur Betätigung der Trägereinheit erforderlichen Arbeitsfluids eine Zwangsverrieglung der jeweiligen Türen über einen kleinen Hubzylinder vorgenommen, so daß sichergestellt ist, daß vor jedem Beginn einer Hub- und Schwenkbewegung des Palettenwechslers die Schutztüren sicher in der geschlossenen Stellung verriegelt sind.

Weitere besonders vorteilhafte Merkmale und Ausführungsformen der Erfindung sind in den Unteransprüchen angegeben.

Ein Ausführungsbeispiel der Erfindung wird nachfolgend unter Bezugnahme auf die Zeichnung näher erläutert; in der Zeichnung zeigt:
- Figur 1: eine schematische perspektivische Darstellung eines Palettenwechslers nach der Erfindung, und
- Figur 2: eine Teilschnittdarstellung des Palettenwechslers nach Figur 1, die insbesondere den Aufbau und das Zusammenwirken der mit den Kupplungsfäusten versehenen Trägereinheit mit den an den Paletten vorgesehenen Ansätzen erkennen läßt.

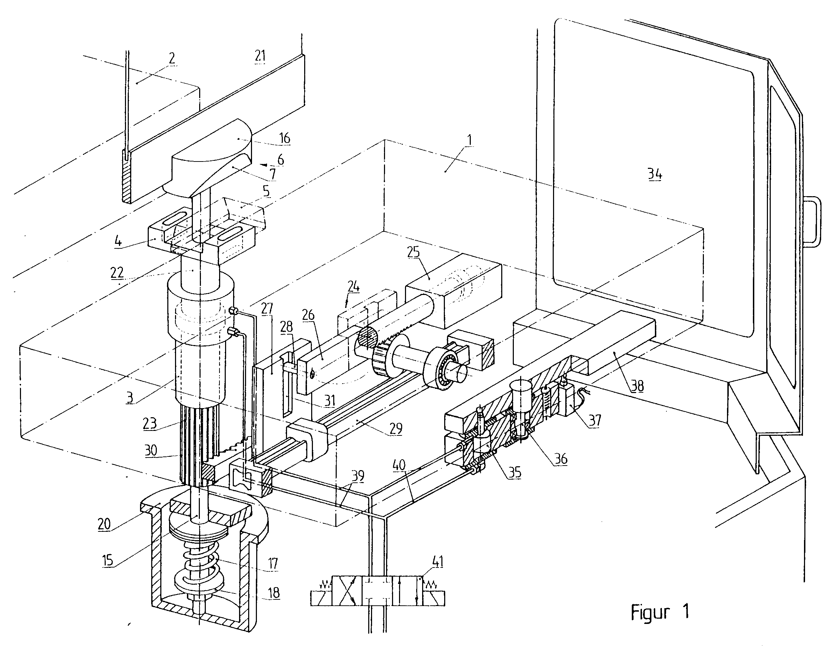

Figur 1 zeigt schematisch angedeutet eine sich in der Rüststation befindende Palette 1 sowie eine sich in der Arbeitsstation befindende Palette 2. Ein Wechsel der Position beider Paletten 1, 2 erfolgt durch einen sich über 180° erstreckenden Schwenkvorgang.

Dieser Schwenkvorgang wird mittels einer Trägereinheit 3 realisiert, die zwei einander diametral gegenüberliegende Kupplungsfäuste 4 aufweist, die in komplementär ausgebildete Palettenansätze 5 eingreifen können. Diese Palettenansätze 5 können an die jeweilige Palette 1, 2 unmittelbar angeformt, vorzugweise angegossen werden, aber es ist grundsätzlich auch möglich, diese Adapterteile darstellenden Ansätze auch nachträglich mit den jeweiligen Paletten zu verschrauben oder in sonstiger Weise an diesen Paletten dauerhaft zu fixieren.

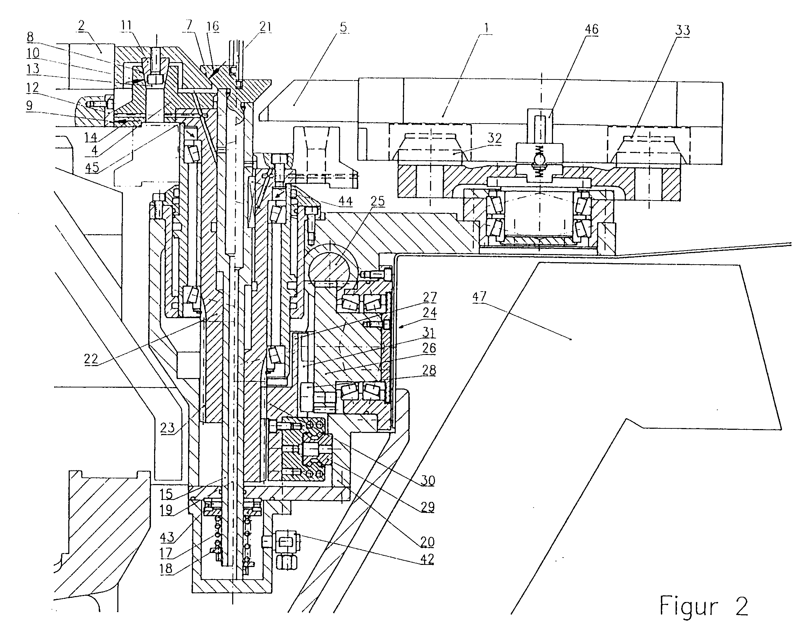

Ein zwischen den Kupplungsfäusten 4 und den Palettenansätzen 5 erreichbarer Form- und Kraftschluß wird durch ein Spannorgan 6 sichergestellt, das über Keilspannflächen 7 auf entsprechende Schrägflächen am jeweiligen Palettenansatz 5 einwirken kann. Dies wird im einzelnen noch anhand der Figur 2 erläutert.

Das Spannorgan 6 besteht aus einem vertikal verschiebbar gelagerten und mit der verschwenkbaren Trägereinheit 3 drehfest gekuppelten Zentralstab 15 sowie einem an einem Ende angebrachten Spannkopf 16 und einer am anderen Ende angreifenden Spanneinheit 17.

Der Spannkopf 16 dient gleichzeitig als Träger für eine Trennscheibe 21 zwischen Arbeitsraum und Rüstraum.

Die Spanneinheit 17 wird bevorzugt von einer Druckfeder gebildet, die zwischen einem Ansatz 18 am Zentralstab 15 und einer am Wechslergehäuse 20 abgestützten Drehfläche angeordnet ist.

Der Zentralstab 15 erstreckt sich durch ein Zentralteil 22, das an seinem unteren Ende mit einer Verzahnung 23 versehen ist, welche in Eingriff mit einem Schwenkantrieb 24 steht. Der Zentralteil 22 ist nach Art einer Zylinder-Kolbenanordnung über Steuerleitungen 39 und ein zugehöriges Steuerventil 41 mit Druckmedium beaufschlagbar und kann auf diese Weise vertikal bewegt werden.

Im Zuge dieser Vertikalbewegung greifen die Kupplungsfäuste 4 in die entsprechenden Ausnehmungen oder Gegenelemente der Palettenansätze 5 ein, und es kommt dann im Zuge des weiteren Anhebens des Zentralteils 22 zu einem Zusammenwirken zwischen den Palettenansätzen 5 und dem Spannkopf 16, wobei die zugehörigen Keilspannflächen 7 zur Wirkung kommen und eine form- und kraftschlüssige Verriegelung sicherstellen. In diesem verriegelten und angehobenen Zustand können die Paletten 1, 2 dann mittels des Schwenkantriebs 24 über 180° verschwenkt und dann wieder abgesetzt werden.

Der sich durch besondere Kompaktheit einerseits und optimalen Bewegungsverlauf andererseits auszeichnende Schwenkantrieb 24 besteht aus einem mittels einer Zylinder-Kolbenanordnung 25 betätigten Kurbel-Kulissentrieb, wobei eine um eine horizontale Achse über einen Winkel von 180° verschwenkbare Kurbel 26 über ein Kuppelorgan 28 in eine Vertikalführung 31 eines Kulissenteils 27 eingreift, das auf einer Horizontalführung 29 verschiebbar und mit einer Zahnstange 30 fest verbunden ist, die mit der Verzahnung 23 des Zentralteils 22 kämmt. Endlagensicherungen können dabei sowohl im Zylinder als auch in Form eines Anschlags am Gehäuse selbst vorgesehen sein. Dieser kompakte Schwenkantrieb, der auch bei beengten Raumverhältnissen stets verwendbar ist, besitzt ein optimales Beschleunigungs- und Bremsverhalten, was bei den großen zu bewegenden Massen von erheblicher Bedeutung ist. Erreicht wird dies durch den Kurbel-Kulissentrieb, der eine sinusartige Linearbewegung der Zahnstange 30 ermöglicht.

Figur 1 zeigt ferner eine der Rüststation zugeordnete Schutztüre 34, die um eine gehäusefeste Schwenkachse 36 zwischen einer Öffnungs- und einer Schließstellung bewegbar ist. Die Schließstellung ist mittels eines Positionsfühlers 37 abtastbar, und das von diesem Positionsfühler 37 gelieferte Signal wird als Kriterium dafür benutzt, daß ein Wechselvorgang durchgeführt werden darf, da dieses Signal kennzeichnend für eine ordnungsgemäß geschlossene Schutztüre 34 ist.

Um zu gewährleisten, daß die Schutztüre 34 in der geschlossenen Position eindeutig und sicher verriegelt ist und damit auch nicht versehentlich geöffnet werden kann, ist ein aus einem kleinen Hubzylinder bestehendes Riegelorgan 35 vorgesehen, das einen Riegelzapfen in eine entsprechende Bohrung im Scharnier 38 der Schutztüre 34 bewegt, sobald ein Palettenwechselvorgang gestartet wird. Dazu ist der Hubzylinder über Ansteuerleitungen 40 mit den Steuerleitungen 39 zur Betätigung des Zentralteils 22 verbunden, so daß bei entsprechender Betätigung des Ventils 41 der kleine Hubzylinder sofort unter Druck gesetzt wird und die Verriegelung erfolgt, bevor das Zentralteil 22 zusammen mit den Kupplungsfäusten 4 angehoben wird.

Die Figur 2 zeigt wesentliche Funktionsteile des Palettenwechslers nach Figur 1 im Detail, wobei für gleiche Teile jeweils auch gleiche Bezugszeichen verwendet sind.

Das die Kuppelfäuste 4 tragende Zentralteil 22 ist in Figur 2 im rechten Teil in der abgesenkten Ruhestellung und im linken Teil in der angehobenen aktiven Kupplungsstellung dargestellt. Entsprechendes gilt für den den Spannkopf 16 tragenden Zentralstab 15, wobei die entsprechenden Differenzdarstellungen zeigen, daß der Hubweg des Spannkopfes wesentlich geringer ist als der Hubweg der Kupplungsfäuste 4. Dies ist gleichbedeutend damit, daß die form- und kraftschlüssige Verklemmung zwischen den Kupplungsfäusten 4 und den Palettenansätzen 5 aufgrund der Wirkung des Spannkopfes 16 erst im letzten Teilbereich des Gesamthubs erfolgt, wenn die Paletten von den Auflagebolzen 32 abgehoben sind und sich damit in der Schwenkstellung befinden. Diese Auflagebolzen 32 sind auf einem Teil ihrer Höhe konisch ausgebildet, und es ist angrenzend an den sich verjüngenden Abschnitt ein zylindrischer Ansatz 33 vorgesehen, der jeder Aushebetendenz der Palette beim manuellen Spannen entgegenwirkt und außerdem dazu beiträgt, daß vorgesehene hydraulische Kupplungen gerade eingerückt werden können.

Jede Kupplungsfaust 4 ist mit einem nach oben vorstehenden Ansatz ausgestattet, in dem eine Paßaufnahme 13 ausgebildet ist, die sich vertikal durch die Kupplungsfaust erstreckt und im oberen Bereich unter Ausbildung von Keilflächen 8 konisch verläuft. Dieser Teil der Kupplungsfaust 4 erstreckt sich in eine im wesentlichen U-förmige Ausnehmung 10 des Palettenansatzes 5, wobei in dieser Ausnehmung ein aus Hartmetall bestehendes Paßkeilelement 11 befestigt ist, das mit der Paßaufnahme 13 zusammenwirkt. Radial nach außen versetzt und unterhalb der Keilfläche 8 ist an der Kupplungsfaust 4 eine vertikale Stützfläche 9 vorgesehen, die mit einem ebenfalls vorzugsweise aus Hartmetall bestehenden Stützflächenelement 12 zusammenwirkt, das an der Palette 2 vorgesehen und exakt justiert angebracht, insbesondere verschraubt ist.

Wenn die Kupplungsfaust 4 in den Palettenansatz 5 während des Anhebens des Zentralteils 22 eingreift, dann tritt das Paßkeilelement 11 zentrierend in die komplementäre Paßaufnahme 13 ein, und die Stützfläche gelangt am Stützflächenelement 12 zur Anlage. Die Exakt-Positionierung erfolgt dann durch das Angreifen des Spannkopfes 16 an der entsprechenden Schrägfläche des Palettenansatzes 5, und die über die Spanneinheit 17 erzeugte Spannkraft bewirkt, daß die Keil- und Stützflächen 8, 9 form- und kraftschlüssig in Richtung der angreifenden Fliehkraft gedrückt werden. Das auf diese Weise gelöste Problem des Spiels ist bei bisher bekannten Vorrichtungen nicht erkannt worden und kann während des Schwenkens zum Kippen der Palette führen, was durch die gemäß der Erfindung getroffenen Maßnahmen ausgeschlossen ist.

Die auf die Palette 2 und insbesondere auf den Palettenansatz 5 wirkenden Kräfte während der Positionierung sind in Figur 2 durch Pfeile dargestellt.

Da die miteinander zusammenwirkenden Spann- und Stützflächen im wesentlichen vertikal gerichtet sind und keine Tendenz besitzen, Späne zu halten, ist bereits durch diese spezielle Ausgestaltung in Verbindung mit der Vermeidung jeglicher spansammelnder Sacklöcher sichergestellt, daß die form- und kraftschlüssige Kupplung nicht durch Späne verhindert oder verschlechtert wird.

Zur Erhöhung der Sicherheit gegenüber durch Späne bedingte Störungen im automatischen Betrieb sind zusätzlich Blasluftleitungen vorgesehen, die es ermöglichen, vor jedem Kupplungsvorgang die Keil- und Stützflächen von anhaftenden Fremdkörpern, insbesondere Spänen, sicher zu befreien.

Dazu ist der Zentralstab 15 mit einer Axialbohrung 19 versehen, die am unteren Ende des Zentralstabs mündet und über einen Blasluftanschluß 42 die Zuführung von unter Druck stehender Luft über Stichleitungsbohrungen 45 gestattet.

Der Blasluftanschluß 42 ist an einem topfförmigen Teil des Wechslergehäuses vorgesehen, in dem sich die aus einer Druckfeder bestehende Spanneinheit 17 befindet, welche zwischen einem Ansatz 18 und einem gehäusefesten Dreh-Stützlager 43 angebracht ist.

Der entgegen der Spannkraft der Spanneinheit 17 vertikal verschiebbare Zentralstab 15 ist über Keilelemente 44 mit dem Zentralteil 22 drehfest verbunden, bezüglich dieses Zentralteils 22 jedoch axial verschiebbar.

Das untere Ende des Zentralteils 22 ist mit einer Axialverzahnung 23 versehen, die in Eingriff mit der Zahnstange 30 ist, die über einen Kurbel-Kulissenantrieb 26, 27, 28, 29, 31 von einer Zylinder-Kolbenanordnung 25 betätigbar ist. Der Grundaufbau dieses Schwenkantriebs 24 wurde bereits anhand der Figur 1 erläutert. Zu erkennen ist jedoch anhand der Figur 2, daß dieser Schwenkantrieb 24 äußerst kompakt ausgebildet ist und in dem unterhalb der Rüststation zur Verfügung stehenden geringen Raum problemfrei untergebracht werden kann. Es ist unter dieser Anordnung sogar noch Platz für Nebenaggregate oder einen in Figur 2 schematisch angedeuteten Späneförderer.

Aufgrund der hohen Funktionssicherheit eignet sich der erfindungsgemäße Palettenwechsler besonders für den vollautomatischen Betrieb, und er ist geeignet, auch bei großen zu bewegenden Massen kurze Wechselzeiten zu gewährleisten, wobei aufgrund des gewählten Antriebs der Verschleiß minimiert und eine hohe Lebensdauer sichergestellt ist.

### Bezugszeichenliste

- 1: Palette
- 2: Palette
- 3: Trägereinheit
- 4: Kupplungsfaust
- 5: Palettenansatz
- 6: Spannorgan
- 7: Keilspannfläche
- 8: Keilfläche
- 9: Stützfläche
- 10: U-förmige Ausnehmung
- 11: Paßkeilelement
- 12: Stützflächenelement
- 13: Paßaufnahme
- 14: Stützansatz
- 15: Zentralstab
- 16: Spannkopf
- 17: Druckfeder (Spanneinheit)
- 18: Ansatz
- 19: Axialbohrung
- 20: Wechslergehäuse
- 21: Trennscheibe
- 22: Zentralteil
- 23: Verzahnung
- 24: Schwenkantrieb
- 25: Zylinder-Kolbenanordnung
- 26: Kurbel
- 27: Kulissenteil
- 28: Kuppelorgan
- 29: Horizontalführung
- 30: Zahnstange
- 31: Vertikalführung
- 32: Auflagebolzen
- 33: Zylindrischer Ansatz
- 34: Schutztür
- 35: Riegelorgan
- 36: Schwenkachse
- 37: Positionfühler
- 38: Scharnier
- 39: Steuerleitungen
- 40: Ansteuerleitungen
- 41: Steuerventil
- 42: Blasluftanschluß
- 43: Dreh-Stützlager
- 44: Keil
- 45: Stichleitungsbohrung
- 46: Kupplungselement
- 47: Späneförderer

## Patentansprüche

1. Palettenwechsler für Werkzeugmaschinen, bestehend aus einer vertikal verstellbar ausgebildeten, zwischen einer Aufspannstation auf dem Werkstücktisch und einer Rüststation verschwenkbaren Trägereinheit (3) mit zwei einander diametral gegenüberliegenden, zum Eingriff in komplementär geformte Palettenansätze (5) bestimmten Kupplungsfäusten (4) sowie einem in der Trägerein heit (3) zentrisch gelagerten, an den Palettenansät zen (5) angreifenden Spannorgan (16),
dadurch **gekennzeichnet,**
daß die Kupplungsfäuste (4) und die Palettenansätze (5) mittels des über Keilspannflächen (7) auf die Palettenansätze (5) einwirkenden Spannorgans (6) über spanableitend gerichtete Keil- und Stützflächen (8, 9) form- und kraftschlüssig verriegelbar sind, wobei die Palettenansätze (5) in Richtung der beim Wechselvorgang auftretenden Fliehkräfte gedrückt werden.

2. Palettenwechsler nach Anspruch 1,
dadurch **gekennzeichnet**,
daß in einer nach unten offenen, zumindest im wesentlichen U-förmigen Ausnehmung (10) des Palettenansatzes (5) ein sich zum freien Ende hin verjüngendes Paßkeilelement (11) und darunter mit vertikalem und horizontalem Abstand an der Palette (1, 2) ein Stützflächenelement (12) befestigt ist, und daß die Kupplungsfaust (4) eine zum Paßkeilelement (11) komplementäre, vertikal durchgehend offene Paßaufnahme (13) sowie einen mit dem Stützflächenelement (12) zusammenwirkenden Stützansatz (14) aufweist, wobei insbesondere das Paßkeilelement (11) und das Stützflächenelement (12) aus einem Hartemetall bestehen und vorzugsweise mit dem Palettenansatz (5) bzw. der Palette (1, 2) verschraubt sind.

3. Palettenwechsler nach einem der vorhergehenden Ansprüche,
dadurch **gekennzeichnet,**
daß das Spannorgan (6) aus einem vertikal verschiebbar gelagerten und mit der verschwenkbaren Trägereinheit (3) drehfest gekuppelten Zentralstab (15) sowie einem an einem Ende angebrachten Spannkopf (16) und einer am anderen Ende angreifenden Spanneinheit (17) besteht, wobei vorzugsweise der Spannkopf (16) zum Zwecke eines Toleranzausgleichs bezüglich des Zentralstabs (15) insbesondere begrenzt schwenkbar gelagert ist.

4. Palettenwechsler nach Anspruch 3,
dadurch **gekennzeichnet,**
daß die Spanneinheit (17) aus einer einerseits am Wechslergehäuse (20) und andererseits an einem Ansatz (18) des Zentralstabs (15) abgestützten Druckfeder besteht, die zumindest während des letzten Teils des Kuppelhubs der Trägereinheit (3) bei sich bereits mit dem Palettenansatz (5) in Eingriff befindender Kupplungsfaust (4) komprimiert wird.

5. Palettenwechsler nach einem der vorhergehenden Ansprüche,
dadurch **gekennzeichnet,**
daß der Zentralstab (15) eine als Blasluftleitung dienende Axialbohrung (19) aufweist, die mit zumindest einer sich durch die jeweilige Kupplungsfaust (4) erstreckenden und zum Freiblasen von Keil- und Stützflächen (8, 9) dienenden Stichleitungsbohrung (45) in Verbindung steht.

6. Palettenwechsler nach einem der vorhergehenden Ansprüche,
dadurch **gekennzeichnet**,
daß der Spannkopf (16) als Träger für eine Trennscheibe (21) zwischen dem Maschinen-Arbeitsraum und dem Rüstraum ausgebildet ist.

7. Palettenwechsler nach einem oder mehreren der vorhergehenden Ansprüche,
dadurch **gekennzeichnet,**
daß die Trägereinheit (3) ein mit den Kupplungsfäusten (4) fest verbundenes zylindrisches Zentralteil (22) aufweist, das pneumatisch oder hydraulisch vertikal verfahrbar und im Bereich seines den Kupplungsfäusten (4) gegenüberliegenden Endes mit einer Verzahnung (23) versehen ist, die mit einem Schwenkantrieb (24) in Eingriff steht.

8. Palettenwechsler nach einem oder mehreren der vorhergehenden Ansprüche,
dadurch **gekennzeichnet**,
daß der Schwenkantrieb (24) aus einem vorzugsweise mittels einer Zylinder-Kolbenanordnung (25) betätigten Kurbel-Kulissentrieb besteht, wobei eine um eine horizontale Achse über einen Winkel von 180° verschwenkbare Kurbel (26) über ein Kuppelorgan (28) in eine Vertikalführung (31) eines Kulissenteils (27) eingreift, das auf einer Horizontalführung (29) verschiebbar und mit einer Zahnstange (30) fest verbunden ist, die in die Verzahnung (23) des Zentralteils (22) eingreift.

9. Palettenwechsler nach einem oder mehreren der vorhergehenden Ansprüche,
dadurch **gekennzeichnet,**
daß die zur Aufnahme der Paletten (1, 2) dienenden, zumindest auf einem Teil ihrer Höhe konisch ausgebildeten Auflagebolzen (32) an ihren freien Enden mit einem zylindrischen Ansatz (33) versehen sind, dessen Durchmesser dem Kleinstdurchmesser des konischen Bereichs entspricht.

10. Palettenwechsler nach einem oder mehreren der vorhergehenden Ansprüche,
dadurch **gekennzeichnet,**
daß der Rüststation zugeordnete Schutztüren (34) mittels zumindest eines mechanischen Riegelorgans (35) während eines jeden Wechselvorgangs in der Schließstellung blockierbar sind und daß das jeweilige Riegelorgan (35) in Abhängigkeit von der Betätigung des Zentralteils (22) der Trägereinheit (3) gesteuert ist, wobei das Riegelorgan (35) vorzugsweise aus einem einen Sperrstift betätigenden Hubzylinder besteht, der Sperrstift in der Verriegelungsstellung in eine Bohrung im Türscharnier (38) eingreift und der Hubzylinder über Leitungen (40) angesteuert ist, die zu den zur Trägereinheit (3) führenden Steuerleitungen (39) parallelgeschaltet sind.

11. Palettenwechsler nach einem der vorhergehenden Ansprüche,
dadurch **gekennzeichnet,**
daß die Hubbewegung durch die Feder (17) und die Spanneinheit jeweils in den Endlagen der Hubbewegung als Stoßdämpfer wirkt.
